(19) **Europäisches Patentamt**

**European Patent Office**

**Office européen des brevets**

(11) **EP 0 916 206 B1**

(12) **EUROPÄISCHE PATENTSCHRIFT**

(45) Veröffentlichungstag und Bekanntmachung des Hinweises auf die Patenterteilung:
**13.10.2004   Patentblatt 2004/42**

(21) Anmeldenummer: **97932692.3**

(22) Anmeldetag: **31.07.1997**

(51) Int Cl.⁷: **H04L 1/24**, G10L 19/00, H04M 3/22

(86) Internationale Anmeldenummer:
**PCT/CH1997/000289**

(87) Internationale Veröffentlichungsnummer:
**WO 1998/006196 (12.02.1998 Gazette 1998/06)**

(54) **VERFAHREN UND ANORDNUNG ZUM BEURTEILEN DER QUALITÄT EINES ÜBERTRAGENEN SPRACHSIGNALS**

PROCESS AND DEVICE FOR EVALUATING THE QUALITY OF A TRANSMITTED VOICE SIGNAL

PROCEDE ET DISPOSITIF POUR EVALUER LA QUALITE D'UN SIGNAL VOCAL TRANSMIS

(84) Benannte Vertragsstaaten:
**CH DE FR GB IT LI**

(30) Priorität: **02.08.1996   CH 192096**

(43) Veröffentlichungstag der Anmeldung:
**19.05.1999   Patentblatt 1999/20**

(73) Patentinhaber: **Ascom AG**
**3000 Bern 14 (CH)**

(72) Erfinder:
• **PAPING, Martin**
**CH-4512 Bellach (CH)**

• **FÄHNLE, Thomas**
**D-89081 Ulm (DE)**

(74) Vertreter: **Roshardt, Werner Alfred, Dipl.-Phys.**
**Keller & Partner**
**Patentanwälte AG**
**Schmiedenplatz 5**
**Postfach**
**3000 Bern 7 (CH)**

(56) Entgegenhaltungen:
| | |
|---|---|
| **EP-A- 0 644 674** | **EP-A- 0 722 164** |
| **WO-A-94/00922** | **WO-A-95/15035** |
| **WO-A-96/06496** | |

**Beschreibung**

**Technisches Gebiet**

Die Erfindung betrifft ein Verfahren zum Beurteilen der Übertragungsqualität eines Sprachsignals, wobei das Sprachsignal von einem digitaien Übertragungssystem mit einer vorgegebenen Datenrahmenrate von einem Sender zu einem Empfänger übertragen und bei der Übertragung verzerrt wird und wobei das übertragene und verzerrte Sprachsignal einer anschliessenden Beurteilung unterworfen wird.

**Stand der Technik**

Es ist bekannt, dass die Übertragungsqualität bei Mobilfunksystemen stark variieren kann. Dabei spielen die Signalstärken am Empfangsort, die geographische Umgebung und unter Umstanden auch die Fahrgeschwindigkeit des Mobilfunkteilnehmers eine Rolle. Wie sich die auf physikalischer Ebene (Funkübertragungsstrecke) auftretenden Störungen auf das digital übertragene Sprachsignal und dessen Verständlichkeit auswirken, ist nicht von vornherein klar. Umgekehrt lässt sich auch meist nicht ohne weiteres sagen, auf welche physikalische Störung eine subjektiv festgestellte Beeinträchtigung der Verständlichkeit bzw. Qualitätseinbusse des empfängerseitig (durch einen Lautsprecher) wiedergegebenen Sprachsignals zurückzuführen ist.

Aus der EP 0 644 674 A2 ist nun ein Verfahren zum Beurteilen der Übertragungsqualität einer Sprach-Übertragungsstrecke bekannt, das auf automatischer Ebene eine Beurteilung ermöglicht, die stark mit dem menschlichen Empfinden korreliert. D. h das System kann eine Bewertung der Übertragungsqualität durchführen und einen Massstab anlegen, wie er von einem geschulten Testhorer angewendet würde. Im Endeffekt findet eine integraie Qualitätsbeurteilung statt. Es wird nicht nach den Ursachen der Qualitätseinbusse gefragt.

Aus der EP 0 722 164 A1 ist ein System zur Beurteilung der Signalqualität bekannt, bei welchem das Signal (weiches z.B. ein mit 8 KHz abgetastetes Sprachsignal ist) in Blöcke bzw. Rahmen einer vorgegebenen Länge N unterteilt wird Für jeden Rahmen wird die spektrale Leistungsdichte berechnet. Die weitere Verarbeitung stützt sich auf die Frequenzempfindlichkeit des äusseren menschlichen Hörsystems.

Der Betreiber eines Mobilfunksystems ist natürlich nicht nur an der Beurteilung der Übertragungsqualität, sondern auch an deren Verbesserung interessiert. Es ist deshalb erwünscht, gewisse akustisch feststellbare Effekte als solche zu erkennen und zu bewerten. So können z. B. Störungen auftreten, die dazu führen, dass sich dasSprachsignal wie die Stimme eines Roboters anhört ("Robot Voice"-Effekt). Oft gibt es auch Signalverzerrungen, die zu miauenden Schwankungen im Signal führen ("Ping-Pong"-Effekt).

**Darstellung der Erfindung**

Aufgabe der Erfindung ist es, ein Verfahren der eingangs genannten Art anzugeben, das die Identifikation von gewissen akustisch feststellbaren Verzerrungen und deren Gewichtung hinsichtlich der Signalqualitätsbeeinträchtigung ermöglicht.

Die Lösung der Aufgabe ist durch die Merkmale des Anspruchs 1 definiert. Gemäss der Erfindung werden aus dem übertragenen Sprachsignal Frequenzkomponenten extrahiert und analysiert. die mit einer Datenrahmenrate des digitalen Übertragungssystems korrespondieren. Bei einer Rahmenlänge von z. B. 20 ms ist die tiefste zu analysierende Frequenz 50 Hz. Mit Vorteil wird aber nicht nur die 50 Hz Komponente extrahiert, sondern auch deren Oberwellen, d. h. deren ganzzahlige Vielfache.

Die Analyse und die Berechnung eines "Qualitätswertes" können auf verschiedene Weisen durchgefuhrt werden. Es können z.B. die einzelnen Amplitudenwerte ermittelt und mit einem Referenzwert verglichen werden. Mehrere Amplitudenwerte können zusammengefasst werden. Es können auch spektrale Leistungsdichten berechnet und mit Referenzwerten verglichen werden. Gemäss einer bevorzugten Ausführungsform wird der Referenzwen auf der Basis einer vorgängig durchgeführten Analyse des zu übertragenden Signals bestimmt. Dabei werden die erfindungsgemassen Signalkomponenten herausgefiltert und nach Bedarf analysiert, um dann den Referenzwert zu bestimmen. Es können natürlich mehrere Referenzwerte festgelegt werden, um beispielsweise eine Klassierung vornehmen zu können.

Vorzugsweise werden nicht alle ganzzahligen Vielfachen der Grundfrequenz, sondern nur eine beschränkte Anzahl von Frequenzen ausgewertet. Die obere Grenze für die zu analysierenden Frequenzen liegt z. B. im Bereich der maximalen Empfindlichkeit des menschlichen Gehörs, d. h. bei 2 - 3 KHz. Auf diese Weise können die relevanten akustischen Effekte in den meisten Fällen problemlos identifiziert und quantifiziert werden, wobei der Rechenaufwand in Grenzen gehalten werden kann. Die Grundfrequenz selbst braucht nicht analysiert zu werden. Die kleinste berücksichtigte Harmonische kann z. B. bei 200 Hz liegen. In der Regel werden alle Harmonischen zwischen der tiefsten und höchsten Frequenz Hmin bzw. Hmax berücksichtigt. Es ist aber auch denkbar, dass anstelle einer ununterbrochenen Frequenzreihe nur ganz bestimmte ausgewählte Frequenzen ausgewertet werden. Die Wahl dieser Frequenzen kann sich aus einer Analyse des Übertragungsverhaltens des Kommunikationssystems und den jeweiligen spektralen Leistungen ergeben.

Das Sprachsignal wird mit Vorteil durch ein gleitendes Fenster verarbeitet. D. h. die digitalen Werte des Signals werden entsprechend einer vorgegebenen Fensterfunktion gewichtet mit dem Ziel, die durch die Blockbildung bedingten Frequenzkomponenten möglichst klein zu halten. Aus den zu einem Block zusammengefassten Abtastwerten wird im Endeffekt ein gewichteter Messwert bestimmt. Die Länge eines solchen Fensters ist vorzugsweise mindestens 4 Mal so gross wie ein Datenrahmen.

Zur Gewichtung der erfindungsgemäss ermittelten Frequenzkomponenten können dazwischen liegende Frequenzen des übertragenen Signals herangezogen werden. D. h. bei einem Raster von beispielsweise 50 Hz (50, 100, 150, 200, ... Hz) werden mit Vorteil die in der Mitte dieser Frequenzintervalle liegenden Frequenzen (75, 125, 175, ... Hz) herausgefiltert zur Bestimmung eines amplituden- oder leistungsmässigen Gewichts. Auf diese Weise kann eine leistungsunabhängige Grösse zur Bewertung des empfangenen Sprachsignals ermittelt werden. Um ganz bestimmte Effekte mit charakteristischen Frequenzbildern zu identifizieren, können die extrahierten Frequenzkomponenten bei Bedarf auch individuell gewichtet werden. Die entsprechende Wichtungsfunktion kann im voraus festgelegt sein oder von Fall zu Fall neu berechnet werden.

Im Hinblick auf eine möglichst hohe Stabilität des Bewertungssystems ist es von Vorteil, wenn aus einer Reihe von Referenzwerten jeweils nur der grösste für die empfangsseitige Auswertung herangezogen wird. Mit anderen Worten: Wenn mit einem gleitenden Fenster gearbeitet wird und nach einem vorgegebenen Berechnungsverfahren zu jeder Fensterposition ein Referenzwert bestimmt werden kann, dann wird zu einer bestimmten Fensterposition nicht unmittelbar der so errechenbare Wert genommen, sondern es werden die benachbarten Werte ebenfalls berücksichtigt, um dann z. B. den grössten davon als effektiven Referenzwert zu nehmen (lokales Maximum).

Die empfängerseitige Schaltungsanordnung zur Durchführung des erfindungsgemässen Verfahrens umfasst einen Prozessor zur Durchführung einer diskreten Fouriertransformation und zur Analyse der im voraus festgelegten Frequenzkomponenten. In einem Speicher sind die benötigen Referenzwerte abgespeichert.

Ausgangsseitig der beschriebenen Schaltungsanordnung kann ein neuronales Netzwerk vorgesehen sein. (Dieses kann, muss aber nicht, in einer separaten Schaltung implementiert sein, d. h. es kann auch im Prozessor selbst bzw. softwaremässig vorhanden sein.) Das neuronale Netzwerk wird im voraus mit verschiedenen Mustersignalen trainiert, so dass es in Echtzeit die gewünschte Beurteilung durchführen kann. Die erfindungsgemässe Schaltungsanordnung kann im Sinn einer Ergänzung im aus der EP 0 644 674 A2 bekannten System zur Anwendung gelangen. D. h. die erfindungsgemäss bestimmten Messwerte werden zusätzlich zu den bereits bekannten Zwischenwerten in das neuronale Netzwerk eingegeben.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1 Eine schematische Darstellung des Gesamtsystems;
Fig. 2 ein Blockschaltbild zur Erläuterung des erfindungsgemässen Verfahrens.

## Wege zur Ausführung der Erfindung

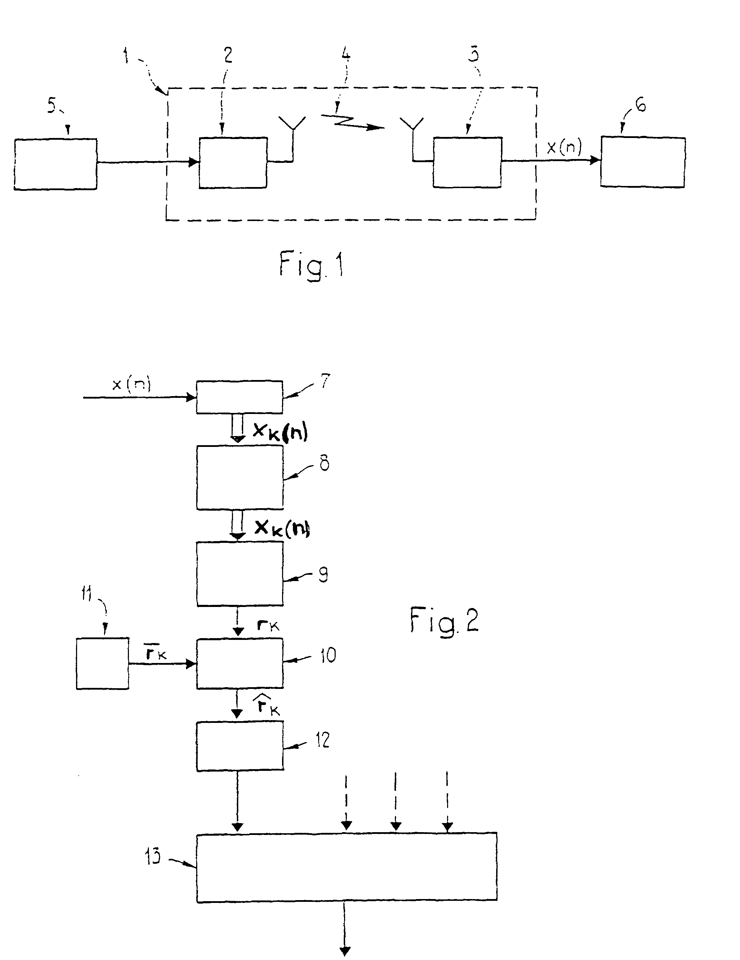

Fig. 1 zeigt ein Blockschaltbild des Gesamtsystems. Mit 1 ist das Übertragungssystem bezeichnet, das es zu testen gilt. Zwei Endgeräte 2, 3 (z. B. Handfunktelefongeräte) sind über eine nicht näher definierte Übertragungsstrecke, die typischerweise eine Funkübertragungsstrecke 4 aufweist, miteinander kommunikationstechnisch verbunden.

Das Übertragungssystem 1 kann ein an sich bekanntes, komplexes Telekommunikationssystem sein, wie es beispielsweise in der EP 0 644 674 A2 anhand der dortigen Fig. 1 im Detail beschrieben ist.

Zum Testen des Übertragungssystems 1 sind eine Senderschaltung 5 und eine Empfängerschaltung 6 vorgesehen. (In der Praxis werden an beiden Endgeräten 2, 3 sowohl eine Senderschaltung 5 als auch eine Empfängerschaltung 6 angeschlossen sein, um das Übertragungssystem in beiden Richtungen prüfen zu können.)

Die Senderschattung 5 gibt ein Sprachsignal in das Endgerät 2 ein. Dies kann auf analoger oder vorzugsweise digitaler Ebene erfolgen. Im letztgenannten Fall wird die Senderschaltung 5 direkt an einen digitalen Senderschaltkreis des Endgerätes 2 (z. B. eines Mobilfunktelefons) angeschlossen. Die Einzelheiten dieser an sich bekannten Technik können der bereits zitierten EP 0 644 674 A2 entnommen werden.

Das Sprachsignal ist in geeigneter Weise vorgegeben. D. h. es enthält z. B. mehrere Sätze oder Wörter einer bestimmten Sprache (typischerweise einer von den Benutzern verwendeten Sprache), wobei diverse Sprachsequenzen abwechslungsweise von einer männlichen und einer weiblichen Person gesprochen sind. Die Länge einer Sprachsequenz beträgt z.B. 2 - 10 Sekunden. Das Sprachsignat kann aus einer beliebigen Anzahl von Wiederholungen einer Sprachsequenz gebildet sein. Auch diesbezüglich sei auf die EP 0 644 674 A2 verwiesen.

Neu ist die Ausgestaltung der Empfängerschaltung 6. Die durch sie verwirklichte Signalverarbeitung soll nun anhand der Fig. 2 im Detail erläutert werden.

Die vom Übertragungssystem 1 gelieferten Abtastwerte x(n) des übertragenen und digitalisierten Audio- bzw. Sprachsignals x(t) werden zunächst in einem Datenblockgenerator 7 zu Datenblöcken xk(n) einer vorgegebenen Länge I zusammengefasst. Die jeweils aufeinanderfolgenden Datenblöcke xk(n) sind um ein Intervall s (z. B. s = 20 ms) gegeneinander verschoben. Jeder Datenblock xk(n) wird in den nachfolgenden Schritten vollständig unabhängig von den anderen verarbeitet. Um die durch die endliche Blocklange bedingten Verzerrungen zu minimieren, werden die Abtastwerte x(n) durch eine Hamming-Fensterfunktion h(n) gewichtet. Für das k-te Fenster gilt:

$$(I) \qquad x_k(n) := x(n + k*s)*h(n)$$

wobei
n = 0 ... I-1
k = 0, 1, 2, ...

Im nächsten Schritt wird jeder Datenblock xk(n) mit einer diskreten Fouriertransformation (DFT) in den Frequenzbereich transformiert (DFT-Prozessor 8). Pro Intervall s kann eine Schätzung der spektralen Leistungsdichte ermittelt werden.

Xk(n) soll die Frequenzkomponenten des Datenblocks xk(n) bezeichnen:

$$(II) \qquad X_k(n):=\left|F\left\{x_k(n)\right\}\right|$$

F bezeichnet die Fouriertransformation. Die Frequenzauflösung $\Delta f$ beträgt

$$(III) \qquad \Delta f = \frac{f_N}{I}$$

wobei $f_N$ die Abtastfrequenz des Sprachsignals x ist (z. B. $f_N$ = 8 KHz).

Im nächsten Schritt geht es darum, einen Wert zu ermitteln, der eine quantitative Aussage über die Stärke der durch die Datenrahmenrate bestimmten Repetitionsfrequenz f, und deren Harmonischen erlaubt. Im folgenden wird angenommen, dass die Länge eines Datenrahmens im Übertragungssystem 1 z. B. 20 ms beträgt. Die Repetitionsfrequenz fr liegt dann bei 50 Hz.

Gemäss einer besonders bevorzugten Ausführungsform wird nun (im Rechner 9) ein charakteristischer Wert $r_k$ wie folgt berechnet:

$$(VI) \qquad r_k = \log \frac{\prod_{m=H\min}^{H\max} X_k\left(\left|\frac{mf_r}{\Delta f}\right|\right)}{\prod_{m=H\min}^{H\max} X_k\left(\left|\frac{(m+\frac{1}{2})f_r}{\Delta f}\right|\right)}$$

Dabei bezeichnen Hmin und Hmax die kleinste bzw. grösste rechnerisch berücksichtigte Harmonische im Frequenzbereich. Hmin und Hmax werden so festgelegt, dass der grösste Teil der entsprechenden spektralen Leistung erfasst wird. Vorzugsweise werden Harmonische im Bereich von 200 - 2000 Hz rechnerisch berücksichtigt. Die Leistung des Zählers wird durch die zwischen den Harmonischen liegenden spektralen Leistungen normiert. Im vorliegenden Beispiel ist der Zähler aus den in der Mitte zwischen den Harmonischen auftretenden Amplituden gebildet.

Der Logarithmus ist nicht unbedingt erforderlich, sorgt aber dafür, dass der charakteristische Wert $r_k$ für die nachfolgende Auswertung in einem günstigen Wertebereich liegt. Es ist zu beachten, dass $r_k$ unabhängig von der gesamten Signalleistung ist.

Im nächsten Schritt findet ein Vergleich zwischen dem gemessenen charakteristischen Wert $r_k$ und einem Referenzwert $r_k$ (pro Intervall s) statt. Der genannte Referenzwert wird z. B. wie folgt aus dem senderseitig unverzerrt ausgegebenen Sprachsignal abgeleitet:

$$\text{(V)} \qquad \overline{r_k} = \max\left\{ r'_{k-w}, \ldots, r'_{k+w} \right\}$$

Dabei werden mit $r'_k$ die Werte bezeichnet, die sich durch Auswerten der Formel (IV) für das unverzente Sprachsignal ergeben.

Im vorliegenden Beispiel wird also ein Fenster der Breite 2w + 1 um den k-ten Wert $r'_k$ gelegt, so dass Fehler, die durch Ungenauigkeiten der empfängerseitigen Synchronisation bedingt sind, abgefedert werden. Im Endeffekt werden die Schwankungen des Referenzwertes reduziert. Die Breite des Fensters liegt typischerweise im Bereich von 3 bis 15 Werten.

Die Referenzwerte $\overline{r_k}$ sind in einem Speicher 11 abgespeichert und werden in der erforderlichen Reihenfolge an den Dividierer 10 ausgegeben. Dieser bildet das nachfolgende Verhältnis:

$$\text{(VI)} \qquad \hat{r}_k = \frac{r_k}{\overline{r_k}}$$

Schliesslich wird der Verhältniswert aus Formel (VI) in einem Klassierer 12 bewertet. D.h. es wird z.B. ein Signal gesetzt, wenn der Verhältniswert grösser als beispielsweise 1.5 ist. Es können natürlich auch mehrere Klassierungsbereiche (bzw. Grenzwerte) vorgegeben sein, wobei der Klassierer 12 dann jeweils angibt, in welchem Klassierungsbereich der Verhältniswert liegt.

Vorzugsweise wird das Klassierungsergebnis zusammen mit weiteren Parametern in einem neuronalen Netzwerk ausgewertet. Beispiele für die weiteren Parameter können der bereits zitierten EP 0 644 674 A2 entnommen werden. in diesem Fall stellt der erfindungsgemässe Parameter einen Teilaspekt der gesamten Übertragungsqualität dar.

Die eingangs zitierten Verzerrungen des Sprachsignals können z. B. dadurch identifiziert werden, dass der Verhältniswert für eine gewisse Dauer (d. h. für mehrere Intervalle s) innerhalb eines bestimmten (höheren) Klassierungsbereiches verweilt. In der Trainingsphase (die dem Einsatz des erfindungsgemässen Detektors vorausgeht) lernt das neuronale Netzwerk 13 die Bewertung des Sprachsignals (z.B. nach der Einteilung "gut", "mittel","schlecht").

Zusammenfassend ist festzuhalten, dass durch die Erfindung ein Verfahren geschaffen worden ist, das eine detailliertere Analyse der Übertragungsqualität erlaubt. Insbesondere ist es möglich, ohne Eingriff in das Übertragungssystem Effekte zu erkennen, die z. B. durch das implementierte Fehlerkorrektursystem bedingt sein könnten. Zu beachten ist, dass nicht eine Bitfehlerrate oder dgl. ausgewertet wird, sondern der tatsächlich störende akustische Effekt. Von einer Bitfehlerrate kann nämlich nicht direkt darauf geschlossen werden, wie stark der Zuhörer das Sprachsignal als verzerrt empfindet.

**Patentansprüche**

1. Verfahren zum Beurteilen der Übertragungsqualität eines Sprachsignals, wobei das Sprachsignal von einem digitalen Übertragungssystem (1) mit einer vorgegebenen Datenrahmenrate von einem Sender zu einem Empfänger übertragen und bei der Übertragung verzerrt wird und wobei das übertragene und verzerrte Sprachsignal einer anschliessenden Beurteilung unterworfen wird, **dadurch gekennzeichnet, dass** für die Zwecke der Beurteilung aus dem übertragenen Sprachsignal diejenigen Frequenzkomponenten extrahiert und analysiert werden, die mit einer Repetitionsfrequenz der vorgegebenen Datenrahmenrate des Übertragungssystems und deren Harmonischen korrespondieren.

2. Verfahren nach Anspruch 1, **dadurch gekennzeichnet, dass** ein Referenzwert ($r'_k$) aus einem verzerrungsfreien Sprachsignal abgeleitet wird, welcher zur Beurteilung der Übertragungsqualität herangezogen wird.

3. Verfahren nach einem der Ansprüche 1 bis 2, **dadurch gekennzeichnet, dass** die Frequenzkomponenten nur insoweit extrahiert werden, als sie unterhalb oder in einem Bereich maximaler Empfindlichkeit des menschlichen Gehörs, vorzugsweise im Bereich zwischen 200 - 2000 Hz, liegen.

4. Verfahren nach einem der Ansprüche 1 bis 3, **dadurch gekennzeichnet, dass** das empfangene Sprachsignal in vorgegebenen Intervallen (s) zu Datenblöcken (xk(n)) zusammengefasst wird, welche mit einer Fensterfunktion gewichtet bzw. gefiltert werden.

5. Verfahren nach Anspruch 4, **dadurch gekennzeichnet, dass** die Fensterfunktion eine Länge hat, die mindestens viermal so gross wie eine Länge eines Datenrahmens ist.

6. Verfahren nach einem der Ansprüche 1 bis 5, **dadurch gekennzeichnet, dass** pro Intervall (s) ein gewichteter Messwert ($r_k$) ermittelt wird, wobei die Gewichtung durch die Grösse der zwischen den mit der Datenrahmenrate korrespondierenden Frequenzkomponenten liegenden mittleren Frequenzkomponente bestimmt ist.

7. Verfahren nach einem der Ansprüche 2 bis 6, **dadurch gekennzeichnet, dass** die Referenzwerte dadurch erzeugt werden, dass das unverzerrte Sprachsignal in der gleichen Weise wie das verzerrte im Frequenzbereich analysiert wird, dass aber zuletzt ein lokales Maximum in einem vorgegebenen Glättungsfenster (2w + 1) als effektiver Referenzwert verwendet wird.

8. Schaltungsanordnung zur Durchführung des Verfahrens zum Beurteilen der Übertragungsqualität eines Sprachsignals, mit einem Datenblockgenerator (7) zum Zusammenfassen der Daten des übertragenen und verzerrten Sprachsignals entsprechend einer vorgegebenen Datenrahmenrate und mit einer Schaltung zum Beurteilen der Übertragungsqualität, **dadurch gekennzeichnet, dass** die Schaltung zum Beurteilen der Übertragungsqualität eine Schaltung (8) zum Ermitteln von Frequenzkomponenten des übertragenen Sprachsignals umfasst, die mit der Repetitionsfrequenz der vorgegebenen Datenrahmenrate des Übertragungssystems und deren Harmonischen korrespondieren.

9. Schaltungsanordnung nach Anspruch 8, **gekennzeichnet durch** einen Speicher (11) mit Referenzwerten, welche aus einem verzerrungsfreien Sprachsignal abgeleitet sind.

10. Schaltungsanordnung nach Anspruch 8 oder 9, **gekennzeichnet durch** ein neuronales Netzwerk (13), welches zur Durchführung einer Beurteilung der Übertragungsqualität auf der Basis der ermittelten Messwerte trainiert ist.

**Claims**

1. Procedure for the evaluation of a voice signal's transmission quality, with the voice signal being transmitted from a transmitter to a receiver by a digital transmission system (1) at a specified data frame rate and the transmission being distorted, and with the transmitted and distorted voice signal being subjected to a subsequent evaluation, **characterized by** the fact that for the purpose of the evaluation those frequency components which correspond to a repetition frequency of the specified data frame rate of the transmission system and its harmonics are extracted from the transmitted voice signal and analyzed.

2. Procedure according to Claim #1, **characterized by** the fact that a reference value ($r'_k$) is deduced from a distortion-free voice signal and is then used for evaluating the transmission quality.

3. Procedure according to one of the Claims #1 or #2, **characterized by** the fact that the frequency components are only extracted if they are below or within the range of the human ear's maximum sensitivity, preferably in the range of 200-2000 Hz.

4. Procedure according to one of the Claims #1 through #3, **characterized by** the fact that the received voice signal is summarized at specified intervals (s) into data blocks (xk(n)), which are weighted or filtered with a window function.

5. Procedure according to Claim #4, **characterized by** the fact that the window function has a length of at least four times the length of a data frame.

**6.** Procedure according to one the Claims #1 through #5, **characterized by** the fact that per interval (s) a weighted measurement value ($r_k$) is determined, with the weighting being determined by the size of the frequency component that is between the frequency components which communicate with the data frame rate.

**7.** Procedure according to one of the Claims #2 through #6, **characterized by** the fact that the reference values are generated through the analysis of the undistorted voice signal as well as the distorted one in the frequency range, but that in the end a local maximum is used as the effective reference value in a specified smoothing window (2x - 1).

**8.** Circuit layout for the execution of the procedure for the evaluation of a voice signal's transmission quality, with a data block generator (7) to summarize data of the transmitted and distorted voice signal according to a specified data frame rate and with a circuit for the evaluation of transmission quality, **characterized by** the fact that the circuit for the evaluation of transmission quality includes a circuit (8) for the determination of the transmitted voice signal's frequency components which correspond to the repetition frequency of the specified data frame rate of the transmission system and its harmonics.

**9.** Circuit layout according to Claim #8, **characterized by** a register (11) with reference values that have been deduced from a distortion-free voice signal.

**10.** Circuit layout according to Claim #8 or #9, **characterized by** a neuronal network (13), which is trained to execute an evaluation of the transmission quality based on the determined measurement values.

**Revendications**

**1.** Procédé pour évaluer la qualité de transmission d'un signal vocal, dans lequel le signal vocal est transmis d'un émetteur vers un récepteur par un système de transmission numérique (1) avec un taux de trames de données prédéterminé et est distordu lors de sa transmission et dans lequel le signal vocal transmis et distordu est soumis à une évaluation subséquente, **caractérisé en ce que**, dans le but de l'évaluation à partir du signal vocal transmis, les composantes de fréquence, qui correspondent à une fréquence de répétition du taux de trames de données prédéterminé du système de transmission et à ses harmoniques, sont extraites et analysées.

**2.** Procédé selon la revendication 1, **caractérisé en ce qu'**une valeur de référence ($r'_k$) est déduite d'un signal vocal non distordu, laquelle est prise en compte pour l'évaluation de la qualité de transmission.

**3.** Procédé selon l'une quelconque des revendications 1 à 2, **caractérisé en ce que** les composantes de fréquence ne sont extraites que dans la mesure où elles sont inférieures à ou se situent dans une plage de sensibilité maximale de la capacité auditive humaine, de préférence dans une plage entre 200 et 2000 Hz.

**4.** Procédé selon l'une quelconque des revendications 1 à 3, **caractérisé en ce que** le signal vocal reçu est échantillonné à intervalles prédéterminés (s) sous la forme de blocs de données (xk(n)), lesquels sont pondérés ou filtrés à l'aide d'une fonction de fenêtrage.

**5.** Procédé selon la revendication 4, **caractérisé en ce que** la fonction de fenêtrage présente une longueur, qui est égale au moins au quadruple d'une longueur d'une trame de données.

**6.** Procédé selon l'une quelconque des revendications 1 à 5, **caractérisé en ce qu'**il est déterminé une valeur de mesure pondérée ($r_k$) par intervalle (s), la pondération étant définie par la grandeur des composantes de fréquence moyennes se situant entre les composantes de fréquence correspondant au taux de trames de données.

**7.** Procédé selon l'une quelconque des revendications 2 à 6, **caractérisé en ce que** les valeurs de références sont produites du fait que le signal vocal non distordu est analysé dans la plage de fréquence de la même manière que celui distordu, mais qu'un maximum local dans une fenêtre de lissage prédéterminée (2w + 1) est finalement utilisé en tant que valeur de référence effective.

**8.** Dispositif de circuit pour mettre en oeuvre le procédé pour évaluer la qualité de transmission d'un signal vocal, avec un générateur de bloc de données (7) pour échantilloner des données du signal vocal transmis et distordu en correspondance avec un taux de trames de données prédéterminé et avec un circuit pour évaluer la qualité de transmission, **caractérisé en ce que** le circuit pour évaluer la qualité de transmission comprend un circuit (8) pour déterminer des composantes de fréquence du signal vocal transmis, lesquelles correspondent à la fréquence de répétition du taux de trames de données prédéterminé du système de transmission et à ses harmoniques.

9. Procédé selon la revendication 8, **caractérisé par** une mémoire (11) avec des valeurs de référence, lesquelles sont déduites d'un signal vocal non distordu.

10. Procédé selon la revendication 8 ou 9, **caractérisé par** un réseau neuronal (13), lequel est entraîné dans le but de la mise en oeuvre d'une évaluation de la qualité de transmission sur la base des valeurs de mesure déterminées.

Fig. 1

Fig. 2